# EUROPEAN PATENT APPLICATION

(11) **EP 1 233 274 A2**
(43) Date of publication of application: **21.08.2002**
(21) Application number: 02002873.4
(22) Date of filing: 08.02.2002
(51) Int. Cl.: G01R 31/28

(54) **System and method for testing a display device**

(30) Priority: 08.02.2001 US 267443 P
(71) Applicant: Three-Five Systems, Inc., Tempe, AZ 85281-1230 (US)
(72) Inventor: Kilbride, James, Phoenix, Arizona 85023 (US); Leyba, Manuel, Phoenix, Arizona 85053 (US); Patterson, Ed, Mesa, Arizona 85215 (US); Smith, Pete, Chandler, Arizona 85248 (US)
(74) Representative: Grubert, Andreas

(57) **Abstract**

A system for testing a display device is disclosed. A base has a surface with at least four holes in it. The display device has two layers and a surface. The first layer is a semiconductor substrate. The second layer is a transparent material. The surface of the display device is coupled to the surface of the base at each of the at least four apertures. The holes are positioned relative to the display device such that gravitational forces on the display device are optimally counterbalanced.

## Description

The present invention relates generally to preparation of liquid crystal display devices, and more particularly to a micro display manual tester and methods of its operation.

Liquid crystal displays (LCDs) are commonly used in devices such as portable televisions, portable computers, control displays, and cellular phones to display information to a user. LCDs act in effect as a light valve, i.e., they allow transmission of light in one state, block the transmission of light in a second state, and some include several intermediate stages for partial transmission. When used as a high resolution information display, LCDs are typically arranged in a matrix configuration with independently controlled pixels. Each individual pixel is signaled to selectively transmit or block light from a backlight (transmission mode), from a reflector (reflective mode), or from a combination of the two (transflective mode).

An LCD pixel can control the transference for different wavelengths of light. For example, an LCD can have pixels that control the amount of transmission of red, green, and blue light independently. In some LCDs, voltages are applied to different portions of a pixel to control light passing through several portions of dyed glass. In other LCDs, different colors are projected onto the pixel sequentially in time. If the voltage is also changed sequentially in time, different intensities of different colors of light result. If the micro display quickly changes the wavelength of light to which the pixel is exposed, an observer will see the combination of colors rather than sequential discrete colors. Several monochrome LCDs can also result in a color display. For example, a monochrome red LCD can project its image onto a screen. If a monochrome green and monochrome blue LCD are projected in alignment with the red, the combination will be full color.

Methods of manufacturing micro displays, LCDs having relatively small size pixels, often produce a number of usable devices and some unusable devices. For example, some devices may have a number of pixels that are not connected to the voltage actuation and therefore cannot be adjusted in light transference characteristics. As another example, the liquid crystal itself may not be properly oriented such that even when voltages are applied, the correct transference characteristics do not result. Therefore, it is important to test micro displays to determine whether their pixels will operate to display video images in accordance with voltages that correspond to an input signal.

Many micro displays are manufactured with a substrate layer and a transparent layer. The substrate layer includes circuitry for applying voltages to particular portions, i.e., pixels, of the transparent layer. Testing of micro displays can include optical analysis of the transparent layer while voltages are applied through the circuitry of the substrate layer. The small size of micro displays can complicate both of these operations. Focussing light on and receiving light from a pixel of a micro display involves targeting a very small area. Some micro displays include over two million pixels in an area of less than one square inch. Electrically connecting successive micro displays to be tested such that the connection is made rapidly and accurately can also be a challenge.

The small size and delicate nature of some micro displays formed of a transparent layer mounted on a substrate can also be taken into account. The characteristics of a micro display may not be accurately determined if the micro display is subject to physical forces while being optically analyzed. For example, the physical devices holding the micro display in place can affect the outcome of the testing if the pixels experience physical forces such as tension. Even worse, excessive amounts of such forces can damage pixels or the circuitry needed to actuate those pixels. In such a situation the testing method and apparatus would be counterproductive. Holding the micro display in a position relative to the tester is important however, both for purposes of accurately establishing electrical connection with the display and for accurately targeting particular pixels for optical analysis.

The embodiments of the present application are directed to a system and method of testing a display device. In one embodiment, a base has a surface with at least four holes in it. The display device has two layers and a surface. The first layer is a semiconductor substrate. The second layer is a transparent material. The surface of the display device is coupled to the surface of the base at each of the at least four apertures. The holes are positioned relative to the display device such that gravitational forces on the display device are optimally counterbalanced.

In another embodiment, a vacuum box includes a first surface. The display device includes two layers. The first layer is a silicon substrate and the second layer is a transparent material. The silicon substrate side of the display device is coupled to the first surface of the vacuum box.

In another embodiment, a base includes a surface. The display device has a first surface and one or more electrical connectors. The first surface of the display device is mounted on the surface of the base. An electrical probe is mounted on a frame that is coupled to the base. A cam assembly is coupled to the frame. The electrical probe can be positioned by the cam assembly relative to the display device.

In another embodiment, performing a method orients a display device for testing. A first surface of the display device is positioned proximate to a surface of a base. The base surface includes four apertures. The pressure within the base is reduced relative to the pressure on a second surface of the display device. The base is sealed by blocking the four apertures with the first surface of the display device, such that the display device is held to the base at the four apertures by a pressure differential that optimally counterbalances gravitational forces on the display device.

In another embodiment, performing a method couples a display device to an electrical probe. The display device is mounted on a base. The display device includes a transparent layer. The electrical probe is mounted on a frame that is coupled to the base. A cam assembly that is coupled to the frame is actuated to move the electrical probe relative to the display device along a first axis. The first axis is perpendicular to the transparent layer of the display device.

One technical advantage of the invention is preparing a display device for testing. Another technical advantage of the invention is positioning a display device while optimally reducing tension forces experienced by the display device. Another technical advantage of the invention is positioning the invention relative to an electrical probe to power the display device. Another technical advantage of the invention is positioning the display device along two axes to permit accurate corner and edge alignment capabilities. Those alignment capabilities are relevant to many detector types including human, CCD camera, and photodetector. Another technical advantage is improved of defect resolution and enhanced contrast as a result of the rotation capability of the system. Another technical advantage is the ability to oversample the imager when pixelated detectors (for example cameras) are used, as a result of the rotation and two axes positioning capabilities of the system. Other technical advantages of the present disclosure will be readily apparent to one skilled in the art from the following figures, descriptions, and claims. Various embodiments of the present application obtain only a subset of the advantages set forth. For example, one embodiment of the present invention could only prepare the display device for testing, while another embodiment could achieve several advantages. No one advantage is critical to the disclosure.

A more complete understanding of the present disclosure and advantages thereof may be acquired by referring to the following description taken in conjunction with the accompanying drawings, in which like reference numbers indicate like features, and wherein:
Figure 1 is a side elevation of one embodiment of a structure for testing display devices;
Figure 1A is a top view of a system base;
Figure 2A is a top view of a stage locating base;
Figure 2B is a side view of a stage locating base;
Figure 3 is a top view of a positioning stage base;
Figure 4 is a top view of a pressure plate;
Figures 5A-C are a top view, side view, and end view of a vacuum block;
Figure 6 is a top view of a vacuum block cover;
Figures 7A-B are top and side views of a weight stop;
Figures 8A-C are top, side and end views of a cam anchor plate;
Figures 9A-C are top, side and end views of a cam linkage;
Figure 10 is a side view of an L cam;
Figures 11A-B are side and end views of a cam adjustment knob;
Figure 12 is a top view of a spring guide;
Figures 13A-B are top and side views of an adjustment block;
Figure 14 is a side view of a guide;
Figures 15A-B are end and side views of a Y-adjustment knob;
Figure 16 is a top view of a cable clamp;
Figure 17 is a side view of one embodiment of micro display optical system;
Figures 18A-B are top and end views of a beam splitter module;
Figure 19 is a side view of a beam splitter module spacer;
Figure 20 is a top view of a system cover;
Figure 21 is a top view of a cube holder assembly;
Figure 22 is a top view of an optical system base;
Figure 23 is a front view of an optics bracket;
Figure 24 is a side view of a mirror rail;
Figure 25 is a side view of a spacer-mirror;
Figure 26 is a side view of a stop bracket;
Figure 27 is a top view of a guide rail;
Figure 28 is a top view of a guide skid;
Figure 29 is a top view of a spacer block;
Figure 30 is a side view of a fiber-optic lamp bracket; and
Figure 31 is a top view of a projector lens adapter.

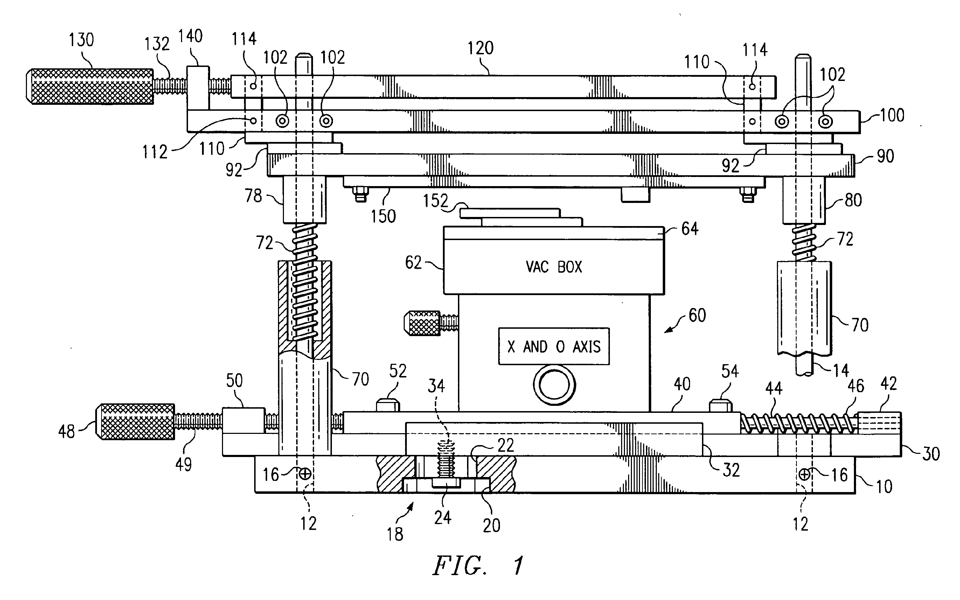

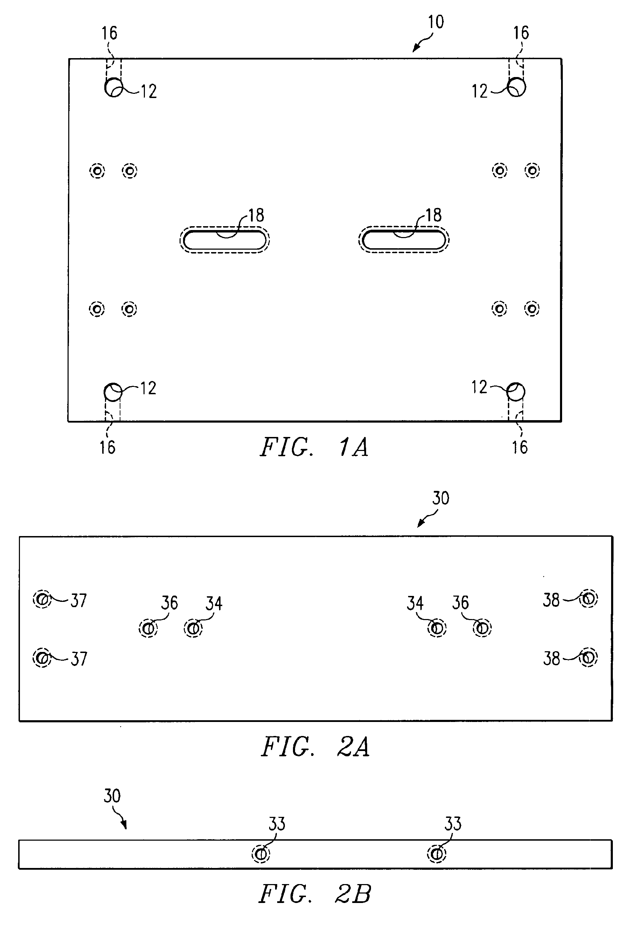

Turning to the drawings, exemplary embodiments of the present application will now be described. Referring to Figure 1, a side elevation of a structure for testing display devices is provided. The system base 10 includes shaft apertures 16 in each of the four corners of the system base 10. The shaft apertures 16 are oriented upward. Each of four shafts 14 has an end mounted in one of the shaft apertures 16 of the system base 10. In one embodiment, the system base 10 is constructed of one-half inch thick aluminum. In one embodiment, the shafts 14 are made by McMaster with product number 6061K11. Apertures 12 in opposite sides of the system base 10 are perpendicular to and extend to the shaft apertures 16. Set screws can be mounted in the apertures 12 to apply force to the shafts 14 located in the shaft apertures 16 and lock them in place.

A stage locating base 30 is located on top of the system base 10. The stage locating base 30 is coupled to the system base 10 by fasteners 24 that are fixed to the stage locating base 30 at apertures 34 and positioned in slots 18 of the system base 10. The slots 18 include a wider portion 20 and a narrower portion 22 to accommodate the head and body of the fastener 24 respectively. The fastener 24 has limited movement along the Y-axis, i.e., left and right in Fig 1, with respect to the system base 10, e.g., the length of the slots 18. The stage locating base 30 therefore has the same limited Y-axis movement with respect to the system base 10, because it is attached to the fasteners 24. The stage locating base 30 is longer than the system base 10 along the Y-axis, but is shorter along the X axis, i.e., into and out of the face of Fig 1. The stage locating base 30 fits between the four shafts 14 and the weight stops 70 that surround the shafts 14 near the system base 10.

Two guides 32 are mounted to the sides of the stage locating base 30 and extend above the stage locating base 30. A positioning stage base 40 is located on top of the stage locating base 30 and is constrained from movement along the X-axis by the guides 32. The positioning stage base 40 has the same dimensions along the X-axis as the stage locating base 30, but is shorter along the Y-axis. Slots 41 in the positioning stage base 40 accommodate fasteners 52, 54 in sliding engagement. The fasteners 52, 54 are fixed to the stage locating base 30 at apertures 36. The positioning stage base 40 can therefore move relative to the stage locating base 30 to the extent that the fasteners 52, 54 can move in the slots 41. A spring guide 42 includes a horizontal shaft 44 that extends into an aperture 43 in the positioning stage base 40. A spring 46 is mounted on the horizontal shaft 44 and biases the positioning stage base 40 to the left relative to the stage locating base 30 to which the spring guide 42 is attached. A Y-adjustment knob 48 includes a threaded shaft 49 that is threadedly engaged with an adjustment block 50 and contacts the positioning stage base 40. The bias of the spring 46 holds the positioning stage base 40 against the threaded shaft 49. The position of the threaded shaft 49 can be adjusted along the Y-axis by rotation of the Y-adjustment knob 48 around the Y-axis, which causes the threads of the shaft 49 to move within the adjustment block 50 along the Y-axis.

The positioning stage base 40 includes four apertures 45 for coupling to the stage 60. In one embodiment, the stage 60 is a Model 4575 Daedal Combination Linear/Rotary Stage. The top surface of the stage is coupled to a vacuum box that includes a vacuum block 62 and a vacuum block cover 64. The stage 60 is adjustable to rotate the vacuum block 62 relative to the positioning stage base 40 around a Z-axis, i.e., the vertical axis in Fig 1. The stage 60 is also adjustable to move the vacuum block 62 along the X-axis relative to the positioning stage base 40. As a combination, the stage 60, positioning stage base 40, stage locating base 30, and system base 10 are able to position the vacuum block 62 linearly in two perpendicular directions, the X-axis and the Y-axis, relative to the system base 10 and rotationally around the Z-axis relative to the system base 10. Those positioning options yield advantages for testing of devices coupled to the vacuum block cover 64.

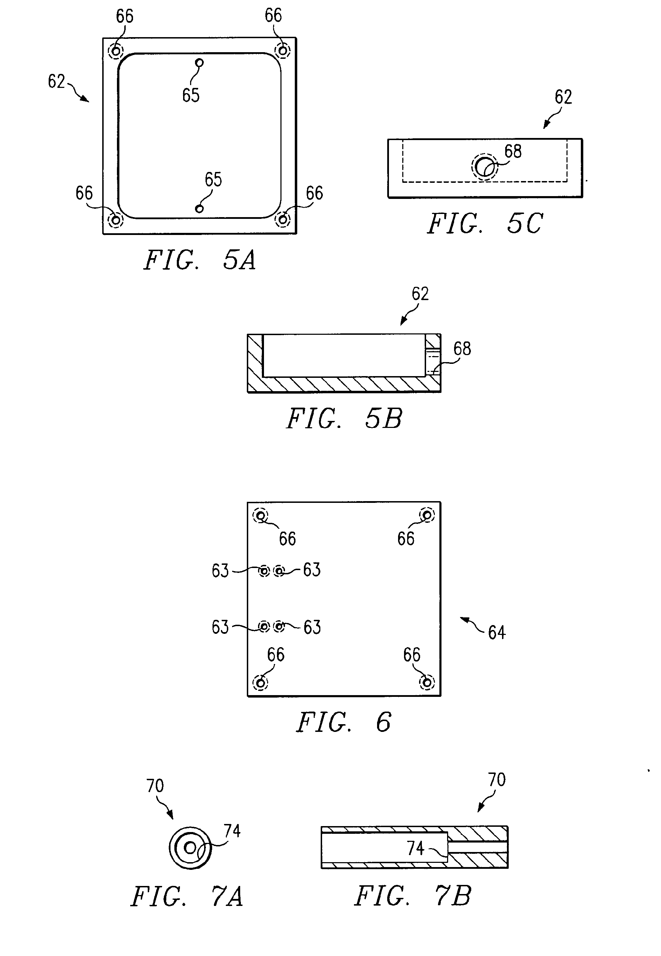

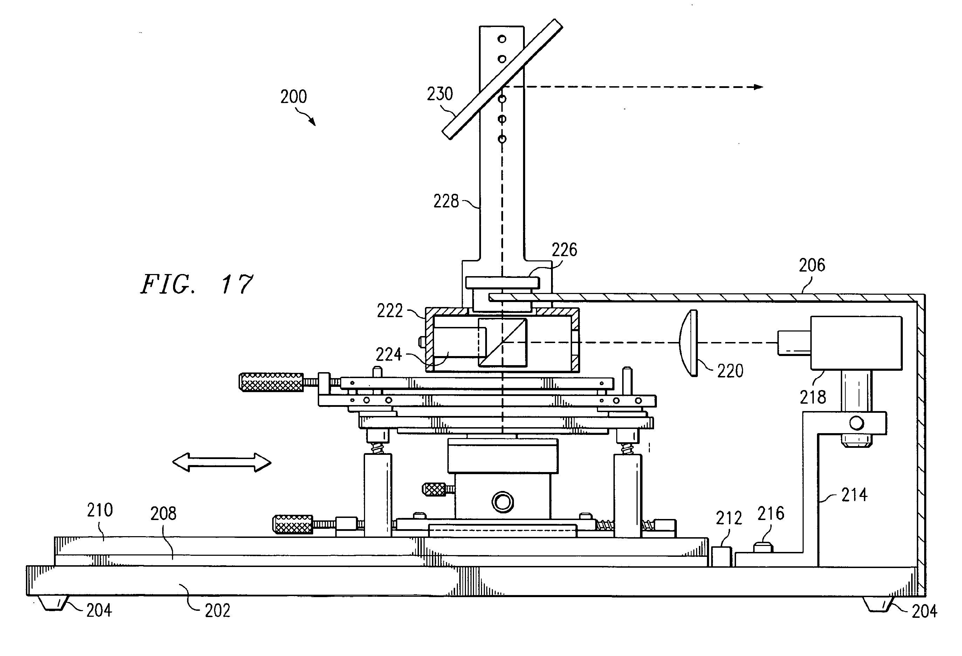

A two layer device 152 is mounted on the vacuum block cover 64. The mounting structure is discussed in more detail with regard to Figure 6. In one embodiment, the device 152 is a micro display that has a silicon substrate layer and a transparent glass layer. The top layer of the device 152 is the transparent layer as can be seen from Figure 17 which shows the optical targeting occurring from the top. The bottom layer is therefore the silicon substrate for a micro display. The bottom layer of the device 152 is the layer which has a bottom surface coupled to the vacuum block cover 64 as can be seen from Figure 1. Using the combination discussed above, the device 152 can be moved in the X-axis, the Y-axis, and the rotational φ-axis relative to the system base 10 and thus also to the shafts 14 rigidly attached to the system base 10.

The weight stops 70 that surround the shafts 14 near the system base 10 are each cylindrical and define an interior shoulder 74 that supports a spring 72. The four springs 72 bias four bearings 78, 80 upward. Each of the four bearings has a wider top portion 92. Each of the four bearings is attached to a pressure plate 90. The pressure plate supports an electrical probe 150 that can couple with the device 152 to provide electrical power and communications.

A cam assembly is provided to counterbalance along the Z-axis the biasing force of the springs 72 exerted through the bearings 78, 80 on the pressure plate 90. The cam assembly includes four L cams 110, a cam anchor plate 100, a cam linkage 120, and a cam knob 130. The cam anchor plate 100 is fixed to each of the four shafts 14 at a particular position along the Z-axis by fasteners 102. The cam anchor plate 100 supports an adjustment block 140 that is threadedly engaged with a threaded shaft 132 of the cam knob 130. The cam linkage 120 includes slots 122 through which it is coupled to the two leftmost shafts 14 allowing for movement along the Y-axis relative to the shafts 14. The L cams 110 are each rotatably coupled around the X-axis to the cam linkage 120 via fasteners mounted in apertures 114. The L cams 110 are each also rotatably coupled around the X-axis to the cam anchor plate 100 via fasteners mounted in apertures 112. When the cam knob 130 is rotated around the Y-axis, the threaded shaft 132 moves along the Y-axis relative to the adjustment block 140 and attached cam anchor plate 100 and pushes against the cam linkage 120. When the cam linkage 120 is moved along the Y-axis relative to the cam anchor plate 100, the L cams 110 rotate clockwise around the X-axis. The bottoms of the L cams 110 each press against the tops of the bearings 92 as a result of the rotation and move the pressure plate 90 downward, while counterbalancing the resulting upward force of the springs 72. The cam assembly, through this mechanic, positions the electrical probe 150 relative to the device 152 along the Z-axis.

By operation of the previously-described structure the electrical probe 150 and the display device 152 can be moved relative to each other along the X-axis, the Y-axis, and the Z-axis. In addition, the electrical probe and the display device can be moved relative to each other in the φ-axis of rotation around the Z-axis.

Figure 1A illustrates a top view of the system base 10. The shaft apertures 12 in each corner intercept apertures 16 used for set screws that anchor the shafts 14. Slots 18 contains fasteners 24 that slidingly engage the system base 10 to the stage locating base 30. Additional apertures are provided for coupling the system base 10 to another surface.

Figure 2A illustrates a top view of the stage locating base 30. Apertures 34 are defined for receiving fasteners 24 that slidingly engage the system base 10 to the stage locating base 30. Apertures 36 are defined for receiving fasteners 52, 54 that slidingly engage the positioning stage base 40 to the stage locating base 30. Apertures 37 are defined for receiving fasteners coupling the adjustment block 50 to the stage locating base 30. Apertures 38 are defined for receiving fasteners coupling the spring guide 42 to the stage locating base 30. Figure 2B illustrates a side view of the stage locating base 30. Apertures 33 are defined for receiving fasteners coupling a guide 32 to each side of the stage locating base 30.

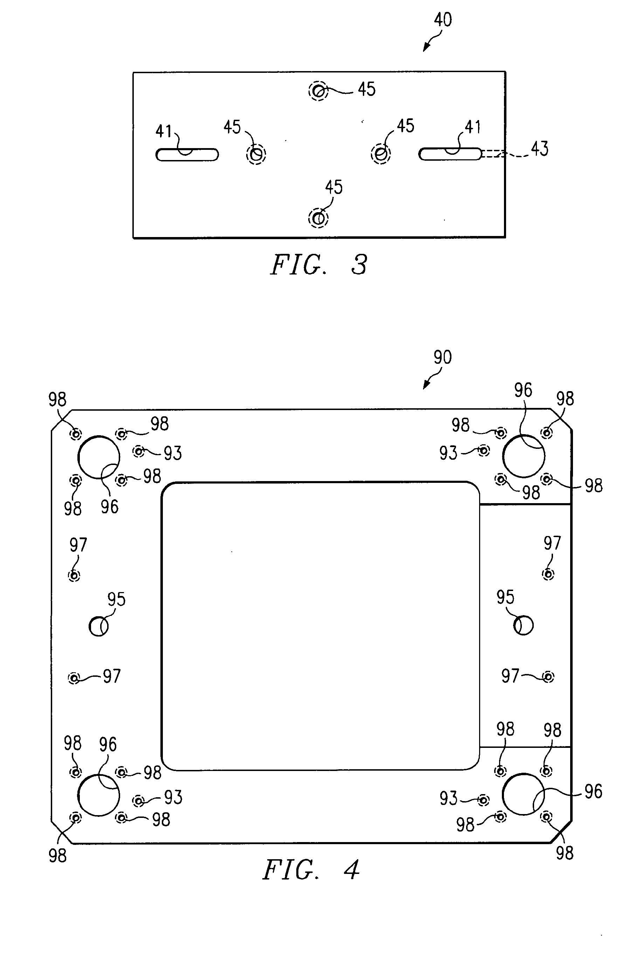

Figure 3 illustrates a top view of the positioning stage base 40. Slots 41 contains fasteners 52, 54 that are coupled to the stage locating base 30. Apertures 45 are provided to fixedly couple the positioning stage base 40 to the bottom surface of the stage 60. Aperture 43 extends horizontally into the end of the positioning stage base 40 to receive the shaft 44 of the spring guide 42.

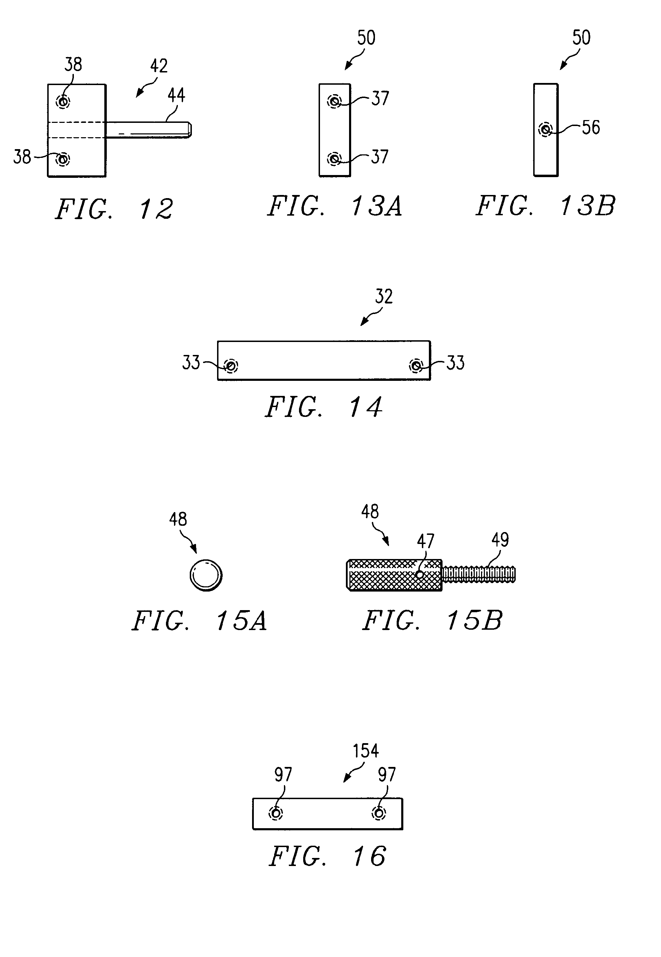

Figure 4 illustrates a top view of the pressure plate 90. The pressure plate 90 includes apertures 96 for receiving the bearings 78, 80 therethrough. Additional apertures 98 are defined to receive fasteners attaching the bearings 78, 80 to the pressure plate 90. Apertures 93, 95, 97 are used to attach to the pressure plate 90 devices that are to be moved relative to the display device 152, one example being the electrical probe 150. Another example is a cable clamp as shown in Figure 16.

Figures 5A-C illustrate a top view, side view, and end view of a vacuum block 62. The vacuum block 62 includes apertures 65 in its bottom plate for sealed coupling to the stage 60. The vacuum block 62 also includes apertures 66 in each corner for coupling the vacuum block cover 64. An aperture 68 defined in a side wall of the vacuum block 62 allows a connection for evacuating the vacuum block 62 to lower the internal pressure relative to the external pressure.

Figure 6 illustrates a vacuum block cover 64. The cover 64 includes four apertures 66 for receiving fasteners that attach the cover 64 to the vacuum block 62. The cover also includes 4 apertures 63 arranged at the vertices of a rectangle. The apertures 63 are arranged in two pairs with the distance between each aperture in a pair being one sixth of the distance between the pairs. The position of the apertures 63 has been found to lower the stress on a micro display 152 coupled to the vacuum block cover 64 by a pressure differential between the apertures 63 and pressure on the other surfaces of the micro display 152. In another embodiment, the pairs of apertures are separated by a distance at least five times the distance between apertures in a pair in order to reduce physical stresses on the display device 152.

Figures 7A-B illustrate top and side views of one of the four weight stops 70. Each weight stop 70 includes a cavity throughout its length with sufficient diameter to enclose a shaft 14. The cavity in the upper portion of the weight stop 70 has greater diameter than the cavity in the lower portion of the weight stop 70. An internal shoulder 74 is formed at the change in diameter. The internal shoulder 74 of each weight stop 70 supports a spring 72 that surrounds the shaft 14.

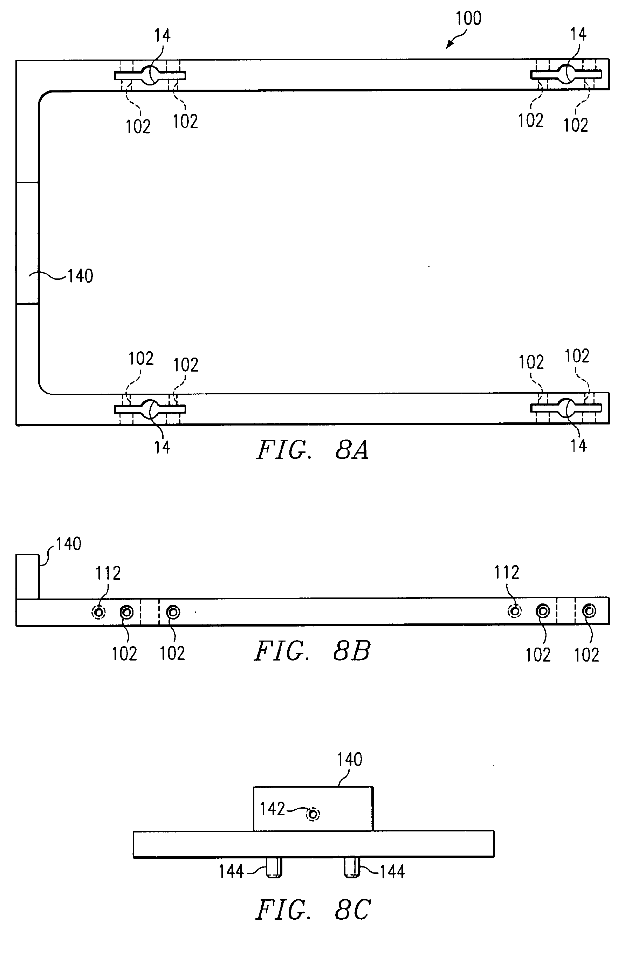

Figures 8A-C illustrate top, side and end views of the cam anchor plate 100. Two horizontal apertures 102 are provided around a socket for each shaft 14 for fixing the cam anchor plate 100 to each shaft 14 along the Z-axis. An adjustment block 140 is attached to the top of one end of the cam anchor plate 100 by fasteners 144. The adjustment block 140 includes a threaded aperture 142 for receiving the threaded shaft 132 of the cam adjustment knob 130. The side view shows apertures 112 for attaching the L cams 110 in a rotational relationship with the cam anchor plate 100. An L cam 110 in attached proximate to each of the four shafts 14.

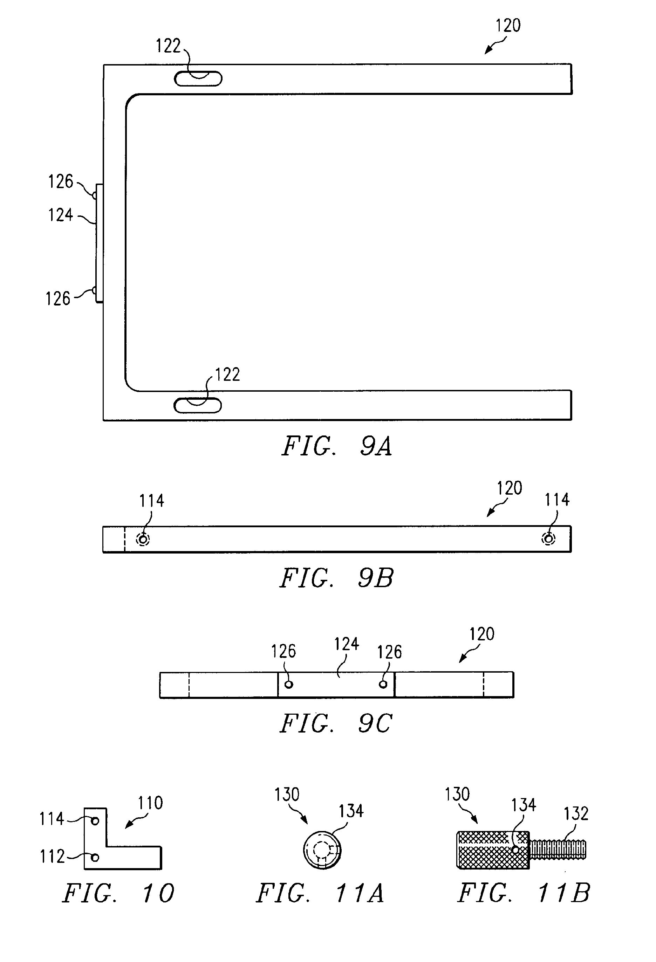

Figures 9A-C illustrate top, side and end views of the cam linkage 120. The cam linkage 120 includes slots 122 for receiving two of the four shafts 14. One end of the cam linkage 120 includes a plate 124 attached with fasteners 126. The plate 124 receives force from the end of the threaded shaft 132 when the cam adjustment knob 130 is actuated sufficiently to position the end of the threaded shaft 132 against the plate 124. The side view shows apertures 114 for attaching the L cams 110 in a rotational relationship with the cam linkage 120. An L cam 110 in attached proximate to each of the four shafts 14.

Figure 10 illustrates a side view of an L cam 110. Each L cam 110 includes an aperture 114 at the top for rotational engagement with the cam linkage 120. Each L cam 110 also includes an aperture 112 in the corner of the L cam 110 for rotational engagement with the cam anchor plate 100. The end of the L cam 110 that does not include an aperture applies pressure to the head 92 of one of the bearings 78, 80, when the L cam 110 rotates.

Figures 11A-B illustrate side and end views of a cam adjustment knob 130. The cam adjustment knob 130 includes a threaded shaft 132 for threadedly engaging the adjustment block 140. The end of the threaded shaft 132 applies horizontal force to the plate 124 of the cam linkage 120, when it is in an extended position. An aperture 134 in the cam adjustment knob 130 is provided. That aperture 134 can be used to attach further adjustment devices.

Figure 12 illustrates a top view of a spring guide 42. The spring guide 42 includes a horizontal shaft 44 for mounting the spring 46 and apertures 38 for attaching the spring guide 42 to the stage locating base 30.

Figures 13A-B illustrate top and side views of the adjustment block 50. Apertures 37 are provided for attaching the adjustment block 50 to the stage locating base 30. A threaded aperture 56 is provided through the entire length of the adjustment block 50 for threaded engagement with the threaded shaft 49 of Y-adjustment knob 48.

Figure 14 illustrates a side view of a guide 32 including apertures 33 for attaching the guide 32 to the stage locating base 30.

Figures 15A-B illustrate end and side views of a Y-adjustment knob 48. The Y-adjustment knob 48 includes a threaded shaft 49 for threadedly engaging the adjustment block 50. The end of the threaded shaft 49 applies horizontal force to the positioning stage base 40, when it is in an extended position. An aperture 47 in the Y-adjustment knob 48 is provided. That aperture 47 can be used to attach further adjustment devices. Figure 16 illustrates a top view of a cable clamp 154 that can be attached to the pressure plate 90 at apertures 97.

Figure 17 illustrates one embodiment of micro display optical system 200 using an embodiment of a micro display manual tester. An optical system base 202 is supported by feet 204. Guide rails 208 and guide skids 210 are mounted on the optical system base 202 for guiding the micro display manual tester in and out of position. A stop bracket 212 limits the manual tester from moving into contact with the fiber-optic lamp bracket 214, which is attached to the optical system base by a fastener 216. A fiber optic high intensity lamp 218 is mounted on the fiber-optic lamp bracket 214 so as to illuminate a lens 220. The light then enters a beam splitter module 222 that contains a cube holder assembly 224 attached to the interior thereof. A system cover 206 is attached to the optical system base 202 and supports a projector lens adapter 226. In another embodiment the system cover 206 supports a projection lens.

An optics bracket 228 includes a beam splitter module spacer 227 and one or more spacer blocks 227. The optics bracket 228 supports a mirror assembly 230 that includes mirror rails and a spacer mirror that can be adjusted in height by attachment to one of the several apertures defined by the optics bracket 228. The light resulting from the fiber optic high intensity lamp 218 that has been targeted at the device 152 is reflected off the mirror assembly 230 for analysis.

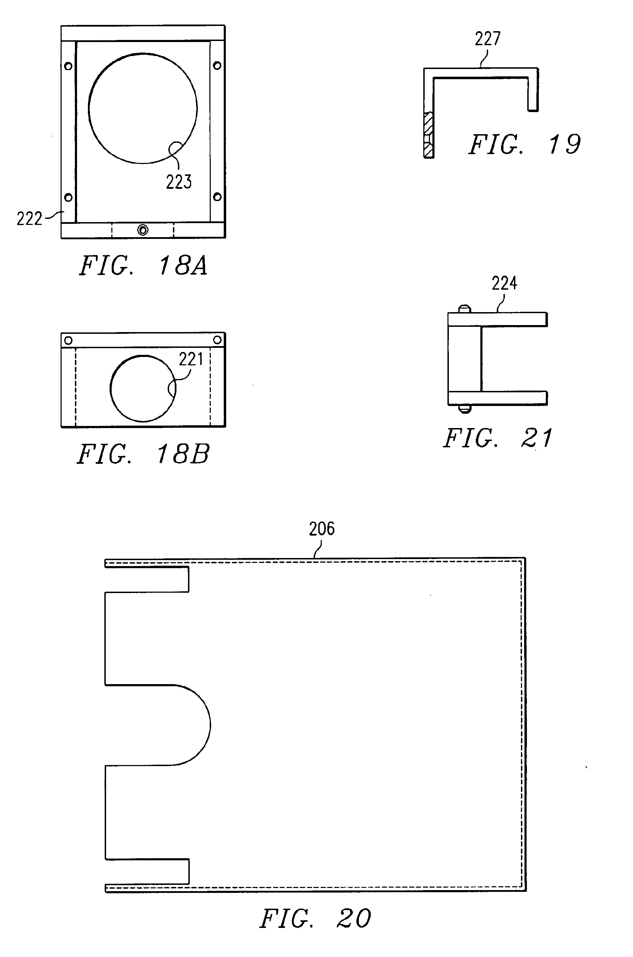

Figures 18A-B illustrate top and end views of the beam splitter module 222. The module 222 includes a top aperture 223 and a side aperture 221. Light from the fiber optic high intensity lamp 218 enters the module 22 through the side aperture 221 and can leave through both the bottom and the top of the module 222.

Figure 19 illustrates a side view of a beam splitter module spacer 227 that can be used to support the beam splitter module 222 with respect to the system cover 206. Figure 20 illustrates a top view of the system cover 206 showing the extended half circle which can be lined up with the top aperture 223 of the beam splitter module 222 to allow light to reach the mirror assembly 230 supported between the optics brackets 228.

Figure 21 illustrates a top view of a cube holder assembly 224. The cube holder assembly 224 can be used to support an optical device that receives light from the fiber optic high intensity lamp 218 and reflects it downward to the display device 152.

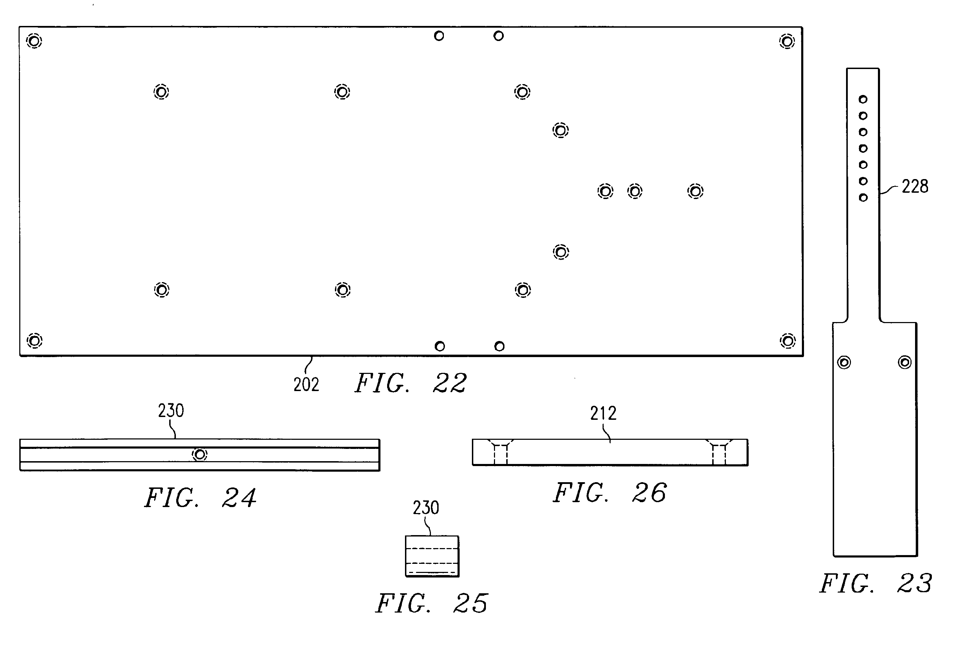

Figure 22 illustrates a top view of the optical system base 202. The optical system base 202 includes several apertures for attaching the guide rails 208, guide skids 210, stop bracket 212, feet 204, and fiber-optic lamp bracket 214.

Figure 23 illustrates a front view of an optics bracket 228. The optics bracket 228 has a low, wide portion and a high, narrow portion. The two apertures in the low portion allow fasteners to support the optics bracket 228 relative to the optical system base 202. The seven apertures in the high portion of the optics bracket 228 allow the mirror assembly 230 to be attached at a variety of heights.

Figure 24 illustrates a mirror rail 230 that can be attached at the central aperture to one of the optics brackets 228. The central groove of the mirror rail 230 that runs its length can be used in association with another mirror rail 230 mounted on the other optics bracket 228 to hold a mirror. Figure 25 illustrates a spacer-mirror.

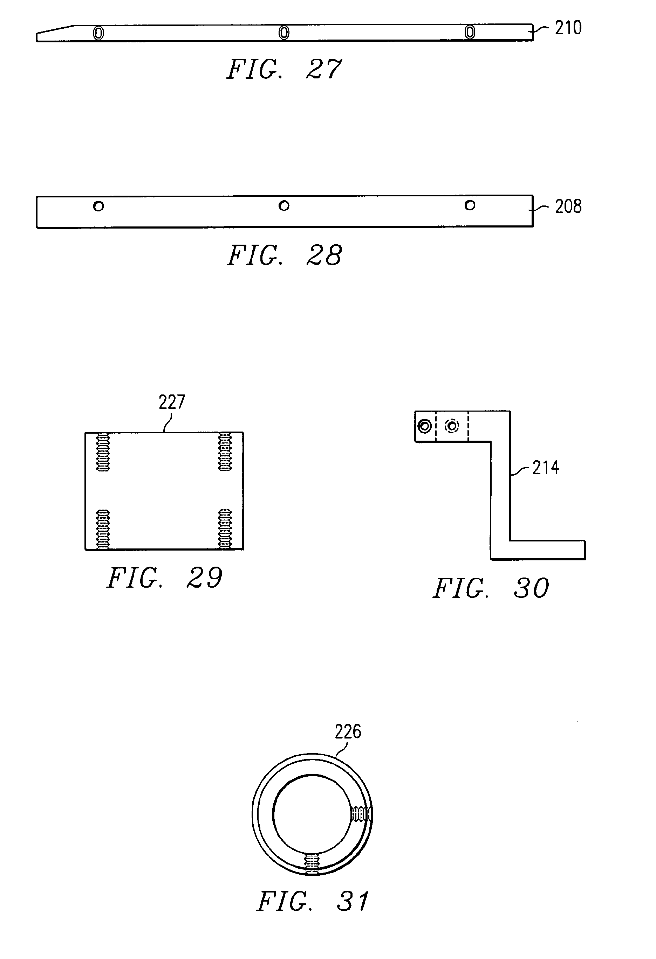

Figure 26 illustrates a side view of the stop bracket 212, which is attached to the optical system base 202 by fasteners placed in the two apertures shown in dotted lines. Figure 27 illustrates a guide rail 210. Figure 28 illustrates a guide skid 208. Both the guide rail 210 and the guide skid 208 are fixed to the optical system base 202.

Figure 29 illustrates a top view of a spacer block 227 that can be used in conjunction with a beam splitter module spacer 227 to support components relative to the optical system cover 206. Figure 30 illustrates a side view of a fiber-optic lamp bracket 214 including the apertures by which a fiber optic high intensity lamp 218 can be mounted. Figure 31 illustrates a top view of a projector lens adapter 226. The projector lens adapter can be mounted in the light path of the top aperture 223 of the beam splitter module 222.

While the present embodiments are susceptible to various modifications and alternative forms, specific embodiments thereof have been shown by way of example in the drawings and are herein described in detail. It should be understood, however, that the description herein of specific embodiments is not intended to limit the invention to the particular forms disclosed, but on the contrary, the intention is to cover all modifications, equivalents, and alternatives falling within the spirit and scope of the invention as defined by the appended claims.

## Claims

1. A system for testing a display device, comprising:
(a) a base comprising a first surface, the first surface defining at least four apertures; and
(b) the display device comprising a first surface, a first layer, and a second layer, the first layer comprising a semiconductor substrate, the second layer comprising a transparent material;
wherein the first surface of the display device is coupled to the first surface of the base at each of the at least four apertures such that gravitational forces on the display device are optimally counterbalanced.

2. The system of claim 1, wherein the base is a vacuum box.

3. The system of claim 2, wherein the display device is coupled to the first surface of the vacuum box at each of the at least four apertures by the pressure differential between the atmosphere and the interior of the vacuum box.

4. The system of claim 1, wherein the semiconductor substrate is silicon.

5. The system of claim 1, wherein the transparent material is glass.

6. The system of claim 1, wherein the first surface of the display device is closer to the first layer than the second layer.

7. The system of claim 1, wherein the first surface of the display device is a surface of the first layer.

8. The system of claim 1, wherein four of the at least four apertures are arranged at the vertices of a rectangle.

9. The system of claim 1, wherein four of the at least four apertures are arranged in two pairs with the distance between the apertures in a pair being less than a fifth the distance between the pairs.

10. The system of claim 1, wherein the first surface of the base defines a plurality of apertures at which the display device is not coupled.

11. A system for testing a display device, comprising:
(a) a vacuum box comprising a first surface; and
(b) the display device comprising a first layer and a second layer, the first layer comprising a silicon substrate, the second layer comprising a transparent material; and
wherein the first layer of the display device is coupled to the first surface of the vacuum box.

12. The system of claim 11, wherein the vacuum box is mounted on a rotating base.

13. The system of claim 11, wherein the vacuum box comprises a cover having the first surface and a vacuum block.

14. The system of claim 11, wherein the display device is a micro display.

15. The system of claim 11, wherein the first surface of the vacuum box defines at least two apertures and the first layer of the display device is coupled to the first surface of the vacuum box at the at least two apertures.

16. The system of claim 15, wherein the first layer of the display device is coupled to the first surface of the vacuum box at the at least two apertures by a pressure differential.

17. The system of claim 11, wherein the vacuum box is mounted on a first base that is movably engaged along a first axis to a second base.

18. The system of claim 17, wherein the second base is movably engaged along a second axis to a third base and the second axis is perpendicular to the first axis.

19. A system for testing a display device, comprising:
(a) a first base comprising a first surface;
(b) the display device comprising a first surface and one or more electrical connectors, the first surface of the display device mounted on the first surface of the first base;
(c) an electrical probe mounted on a frame coupled to the first base; and
(d) a cam assembly coupled to the frame, whereby the electrical probe can be positioned relative to the display device.

20. The system of claim 19, wherein the display device includes a second surface parallel to the first surface and the cam assembly moves the electrical probe along an axis perpendicular to the second surface.

21. The system of claim 19, wherein the frame includes a second base and the first base is rotatably mounted on the second base.

22. The system of claim 21, wherein the frame includes a third base and the second base is movably engaged along a first axis to the third base.

23. The system of claim 22, wherein the frame include a fourth base and the third base is movably engaged along a second axis to the fourth base and the second axis is perpendicular to the first axis.

24. The system of claim 23, wherein the cam assembly is adapted to move the electrical probe along a third axis perpendicular to the first axis and the second axis.

25. The system of claim 19, wherein the frame includes a plurality of springs biasing the electrical probe away from the display device.

26. The system of claim 19, wherein the cam assembly biases the electrical probe toward the display device.

27. The system of claim 19, wherein the frame includes at least four shafts slidingly coupled to the electrical probe.

28. The system of claim 19, wherein the cam assembly includes a knob adjustably coupled to change the position of the electrical probe.

29. A method of orienting a display device for testing, comprising the steps of:
positioning a first surface of the display device proximate to a first surface of a base, the first surface of the base defining four apertures;
reducing the pressure within the base relative to the pressure on a second surface of the display device; and
sealing the base by blocking the four apertures with the first surface of the display device, such that the display device is held to the base at the four apertures by a pressure differential that optimally counterbalances gravitational forces on the display device.

30. The method of claim 29, wherein the display device includes a substrate layer and a transparent layer and the substrate layer is between the first surface and the transparent layer.

31. The method of claim 30, wherein the substrate layer is silicon.

32. The method of claim 30, wherein the transparent layer is glass.

33. The method of claim 29, wherein the four apertures are arranged at the vertices of a rectangle.

34. The method of claim 29, wherein the four apertures are arranged in two pairs with the distance between the apertures in a pair being less than a fifth the distance between the pairs.

35. The method of claim 29, further comprising the step of:
positioning an electrical probe relative to the base, such that the probe is electrically connected to the display device.

36. The method of claim 29, wherein the display device is a micro display.

37. A method of coupling a display device and an electrical probe, comprising the steps of:
mounting the display device on a base, the display device including a transparent layer;
mounting the electrical probe on a frame that is coupled to the base; and
actuating a cam assembly coupled to the frame to move the electrical probe relative to the display device along a first axis perpendicular to the transparent layer of the display device.

38. The method of claim 37, further comprising the step of:
rotating the base relative to the probe.

39. The method of claim 37, further comprising the step of:
moving the base relative to the frame along a second axis perpendicular to the first axis.

40. The method of claim 39, further comprising the step of:
moving the base relative to the frame along a third axis perpendicular to the first axis and the second axis.

41. The method of claim 40, further comprising the step of:
rotating the base relative to the frame around the first axis.

42. The method of claim 37, further comprising the step of:
biasing the frame in a first direction along the first axis; and
wherein actuating the cam assembly includes applying force to the frame in a second direction opposite the first direction.

43. The method of claim 42, wherein the step of biasing is performed by a plurality of springs.

44. The method of claim 37, wherein actuating the cam assembly includes moving the frame along four shafts to which it is slidingly engaged.

45. The method of claim 37, wherein actuating the cam assembly includes
moving a first member along a second axis perpendicular to the first axis;
rotating L-shaped cams rotatably connected to the first member; and
applying force through the L-shaped cams to the frame along the first axis.

46. The method of claim 37, wherein the step of actuating the cam assembly moves the electrical probe relative to the display device along a first axis within a particular range of motion.
